# EUROPEAN PATENT APPLICATION

(11) **EP 4 682 209 A1**
(43) Date of publication of application: **21.01.2026**
(21) Application number: 24770956.1
(22) Date of filing: 14.03.2024
(51) Int. Cl.: C08L 101/00, B29B 17/02, C08G 59/62, C08K 3/013, C08K 3/22, C08K 3/32, C08K 3/36, C08K 5/13, C08L 63/00, H02K 15/02

(54) **EASILY DEGRADABLE RESIN COMPOSITION, STRUCTURE PROVIDED WITH CURED PRODUCT OF EASILY DEGRADABLE RESIN COMPOSITION, METHOD FOR DISASSEMBLING STRUCTURE, AND METHOD FOR RECYCLING MATERIAL FORMING STRUCTURE**

(30) Priority: 15.03.2023 JP 2023040608
(71) Applicant: Sumitomo Bakelite Co.Ltd., Shinagawa-ku Tokyo 140-0002 (JP)
(72) Inventor: TAKAHASHI Yui, Tokyo 140-0002 (JP)
(74) Representative: Müller-Boré & Partner Patentanwälte PartG mbB
(86) International application number: PCT/JP2024/009925
(87) International publication number: WO 2024/190853

(57) **Abstract**

An easily dismantlable resin composition according to the present invention contains a thermosetting resin, and an adhesion strength ratio (S2/S1) measured by the following procedure is 0.30 or less.

[Procedure]

The easily dismantlable resin composition is molded over a copper substrate under conditions of 175°C, 6.9 MPa, and 120 seconds and then subjected to post-curing at 175°C for 4 hours to obtain a test piece.

An adhesion strength [N/mm²], which is obtained in a case where shearing adhesiveness to the copper substrate is measured at a rate of 300 µm/second at room temperature by using the test piece, is denoted as S1 [N/mm²].

Further, an adhesion strength [N/mm²] which is obtained in a case where the test piece is heated at 300°C for 30 minutes and then shearing adhesiveness to the copper substrate is measured at a rate of 300 µm/second at room temperature is denoted as S2 [N/mm²].

## Description

### TECHNICAL FIELD

The present invention relates to an easily dismantlable resin composition, a structural body including a cured product of an easily dismantlable resin composition, a dismantling method for a structural body, and a recycling method for a material constituting a structural body.

### BACKGROUND ART

In recent years, in the automobile industry, the electrification of a vehicle has been actively promoted in order to cope with global climate change and in order to realize a carbon neutral society. Rare elements called rare earths, such as neodymium and dysprosium, are used in a neodymium magnet that is used in a lot of motors of these electric vehicles.

On the other hand, the rare earth is a resource that is concerned about price fluctuation due to uneven distribution of the resource and the balance between demand and supply and is also a resource that imposes a load on the ecosystem during mining and refining, and thus the reduction of the amount of the rare earth to be used is an issue.

Therefore, in the automobile industry, a technology related to the reuse of rare earths has been attracting attention as an effective use of resources.

For example, it is known that a magnet is taken out from a motor that does not satisfy a shipping standard and thus cannot be mounted in an automobile and then disassembled and reused. In addition, for example, Patent Document 1 discloses a method of heating a rotor to a temperature higher than the Curie temperature or the ashing temperature of the adhesive agent and then applying vibration to the metal plate on the end surface of the rotor, where the vibration allows the metal plate to resonate, thereby causing the adhesive agent and the magnet to be detached from hole part.

### RELATED DOCUMENT

### PATENT DOCUMENT

[Patent Document 1] Japanese Unexamined Patent Publication No. 2015-216777SUMMARY OF THE INVENTION

### SUMMARY OF THE INVENTION

### TECHNICAL PROBLEM

However, in such related art as disclosed in Patent Document 1, the disassembly and taking out of the magnet by manual operations are required in a step of taking out the rare earth from the magnet of the motor. Therefore, there is room for improvement in terms of the simplification of the process and the reduction of the recycling cost. In addition, in a case where an attempt is made to heat an adhesive agent to a high temperature (approximately 600°C to 700°C), thereby ashing the adhesive agent and then taking out the magnet, carbon dioxide is generated unless the clean thermal energy is used.

As a result of intensive studies to solve such problems, the inventor of the present invention has found that it is effective that a cured product of a resin composition used for rotor fixation or the like has a predetermined structure and also has predetermined physical properties. Specifically, the inventor of the present invention has found that there is a difference in dismantlability in a case of controlling the adhesiveness to copper in a cured product obtained by curing the resin composition and devised a new index.

### SOLUTION TO PROBLEM

The present invention provides the following ones: an easily dismantlable resin composition, a structural body including a cured product of an easily dismantlable resin composition, a dismantling method for a structural body, and a recycling method for a material constituting a structural body.
[1] An easily dismantlable resin composition containing:
   a thermosetting resin,
   in which an adhesion strength ratio (S2/S1) measured according to the following procedure is 0.30 or less,
   [procedure]
   the easily dismantlable resin composition is molded over a copper substrate under conditions of 175°C, 6.9 MPa, and 120 seconds and then subjected to post-curing at 175°C for 4 hours to obtain a test piece,
   an adhesion strength [N/mm²] which is obtained in a case where shearing adhesiveness to the copper substrate is measured at a rate of 300 µm/second at room temperature by using the test piece is denoted as S1 [N/mm²], and
   an adhesion strength [N/mm²] which is obtained in a case where the test piece is heated at 300°C for 30 minutes and then shearing adhesiveness to the copper substrate is measured at a rate of 300 µm/second at room temperature is denoted as S2 [N/mm²].
[2] The easily dismantlable resin composition according to [1],
   in which the adhesion strength (S2) measured according to the procedure is 3.0 N/mm² or less.
[3] The easily dismantlable resin composition according to [1] or [2],
   in which a linear expansion coefficient α2 of a cured product in a temperature range of 190°C to 230°C is 46 ppm/°C or more, where the cured product is obtained by molding the easily dismantlable resin composition under conditions of 175°C, 6.9 MPa, and 120 seconds and then carrying out post-curing at 175°C for 4 hours.
[4] The easily dismantlable resin composition according to any one of [1] to [3],
   in which a linear expansion coefficient α3 of a cured product in a temperature range of 250°C to 260°C is 60 ppm/°C or more, where the cured product is obtained by molding the easily dismantlable resin composition under conditions of 175°C, 6.9 MPa, and 120 seconds and then carrying out post-curing at 175°C for 4 hours.
[5] The easily dismantlable resin composition according to any one of [1] to [4],
   in which the thermosetting resin includes one or two or more resins selected from an epoxy resin, a phenoxy resin, a polyimide resin, a benzoxazine resin, an unsaturated polyester resin, a phenol resin, a melamine resin, a silicone resin, a cyanate resin, a bismaleimide resin, and an acrylic resin.
[6] The easily dismantlable resin composition according to any one of [1] to [5], further containing:
   a curing agent.
[7] The easily dismantlable resin composition according to [6],
   in which the curing agent includes a phenol-based curing agent.
[8] The easily dismantlable resin composition according to any one of [1] to [7], further containing:
   a thermally expansible inorganic material,
   in which a content of the thermally expansible inorganic material is 5% to 98% by mass with respect to a total amount of the easily dismantlable resin composition.
[9] The easily dismantlable resin composition according to [8],
   in which the thermally expansible inorganic material includes one or two or more selected from crystalline silica, crystalline aluminum phosphate, and derivatives thereof.
[10] The easily dismantlable resin composition according to [8] or [9],
   in which the thermally expansible inorganic material includes one or two or more selected from quartz-type silica, cristobalite-type silica, tridymite-type silica, berlinite-type aluminum phosphate, tridalphite-type aluminum phosphate, crystalphite-type aluminum phosphate, and carnegieite.
[11] The easily dismantlable resin composition according to any one of [1] to [10], further containing:
   aluminum hydroxide.
[12] The easily dismantlable resin composition according to [11],
   in which a content of the aluminum hydroxide is 1% by mass or more with respect to a total amount of the easily dismantlable resin composition.
[13] The easily dismantlable resin composition according to any one of [1] to [12], further containing:
   one or two or more selected from a thermally expansible inorganic material, an inorganic filler, and aluminum hydroxide,
   in which a total content of the thermally expansible inorganic material, the inorganic filler, and the aluminum hydroxide is 60% by mass or more with respect to a total amount of the easily dismantlable resin composition.
[14] The easily dismantlable resin composition according to any one of [1] to [13],
   in which the easily dismantlable resin composition has a powder shape, a granule shape, or a tablet shape.
[15] A structural body including:
   the cured product of the easily dismantlable resin composition according to any one of [1] to [14].
[16] A dismantling method for a structural body, which is a method of dismantling the structural body according to [15], the dismantling method comprising:
   a step of heating the structural body to 200°C or higher to dismantle the cured product of the easily dismantlable resin composition.
[17] A recycling method for a material that constitutes the structural body according to [15], the recycling method including:
   a step of heating the structural body to 200°C or higher to dismantle the cured product of the easily dismantlable resin composition; and
   a step of recovering the material from the structural body.
[18] The easily dismantlable resin composition according to any one of [1] to [14],
   in which the easily dismantlable resin composition is used for forming a fixing member in a rotor that includes
   a rotor core provided to be fixed to a rotating shaft and provided with a plurality of hole parts arranged along a peripheral edge part of the rotating shaft,
   a magnet inserted into the hole part; and
   the fixing member provided in a spacing part between the hole part and the magnet.
[19] A rotor including:
   a cured product of the easily dismantlable resin composition according to [18], as the fixing member.
[20] A dismantling method for a rotor, which is a method of dismantling the rotor according to [19], the dismantling method including:
   a step of heating the rotor to 200°C or higher to dismantle the cured product of the easily dismantlable resin composition.
[21] A recycling method for a material that constitutes the rotor according to [19], the recycling method including:
   a step of heating the rotor to 200°C or higher to dismantle the cured product of the easily dismantlable resin composition; and
   a step of recovering the material from the rotor.
[22] The recycling method according to [21],
   in which the material is one or more selected from the magnet inserted into the hole part and an electromagnetic steel plate.
[23] The easily dismantlable resin composition according to any one of [1] to [14],
   in which the easily dismantlable resin composition is used for forming a sealing member in a stator that has a stator core having a plurality of teeth parts and a plurality of slots formed in an alternating manner in a circumferential direction, a coil wound around each slot and accommodated in each slot, and having a pair of coil ends respectively protruding toward both sides in an axial direction from the stator core, and the sealing member provided in the slot to cover the coil.
[24] A stator including:
   a cured product of the easily dismantlable resin composition according to [23], as the sealing member.
[25] A dismantling method for a stator, which a method of dismantling the stator according to [24], the dismantling method including:
   a step of heating the stator to 200°C or higher to dismantle the cured product of the easily dismantlable resin composition.
[26] A recycling method, which is a recycling method for a material that constitutes the stator according to [24], the recycling method including:
   a step of heating the stator to 200°C or higher to dismantle the cured product of the easily dismantlable resin composition; and
   a step of recovering the material from the stator.
[27] The recycling method according to [26],
   in which the material is one or more selected from a coil and an electromagnetic steel plate.
[28] The easily dismantlable resin composition according to any one of [1] to [14],
   in which the easily dismantlable resin composition is used for forming a sealing member in a power module that includes a wiring board, a plurality of electronic components mounted over the wiring board, and the sealing member that seals the electronic components.
[29] A power module including:
   a cured product of the easily dismantlable resin composition according to [28], as the sealing member.
[30] A dismantling method for a power module, which is a method of dismantling the power module according to [29], the dismantling method including:
   a step of heating the power module to 200°C or higher to dismantle the cured product of the easily dismantlable resin composition.
[31] A recycling method for a material that constitutes the power module according to [29], the recycling method including:
   a step of heating the power module to 200°C or higher to dismantle the cured product of the easily dismantlable resin composition; and
   a step of recovering the material from the power module.
[32] The recycling method according to [31],
   in which the material is a lead frame made of metal.

### ADVANTAGEOUS EFFECTS OF INVENTION

According to the present invention, it is possible to easily dismantle a cured product of an easily dismantlable resin composition containing the thermosetting resin, and thus it is possible to improve the recyclability of the material that constitutes the structural body including the cured product of the easily dismantlable resin composition.

### BRIEF DESCRIPTION OF THE DRAWINGS

FIG. 1 is a plan view showing an example of a rotor.
FIG. 2 is a cross-sectional view showing the rotor shown in FIG. 1.
FIG. 3 is an enlarged cross-sectional view of the rotor shown in FIG. 1.
FIG. 4 is a cross-sectional view showing an example of a motor, which is taken in a direction perpendicular to a rotating shaft direction.
FIG. 5 is a longitudinal cross-sectional view of the motor in a rotating shaft direction, where the motor is shown in FIG. 4.
FIG. 6 is an enlarged view of a periphery of a slot of the motor shown in FIG. 4.
FIG. 7 is a schematic cross-sectional view showing an example of a power module.

### DESCRIPTION OF EMBODIMENTS

In the present specification, a denotation "a to b" in the description of a numerical value range represents a or more and b or less unless specified otherwise. For example, "1% to 5% by mass" means "1% by mass or more and 5% by mass or less". In addition, the lower limit value and the upper limit value of the numerical value range can be respectively combined with the lower limit value and the upper limit value of other numerical value ranges.

Each component and material exemplified in the present specification may be used alone or may be used in a combination of two or more kinds thereof, unless otherwise specified.

Hereinafter, embodiments of the present invention will be described in detail.

### 1. Easily dismantlable resin composition

An easily dismantlable resin composition according to the present embodiment (hereinafter, also simply referred to as a "resin composition") contains a thermosetting resin, and an adhesion strength ratio (S2/S1) measured according to the following procedure is 0.30 or less.

### [Procedure]

The easily dismantlable resin composition is molded on a copper substrate under conditions of 175°C, 6.9 MPa, and 120 seconds and then subjected to post-curing at 175°C for 4 hours to obtain a test piece.

An adhesion strength [N/mm²], which is obtained in a case where shearing adhesiveness to the copper substrate is measured at a rate of 300 µm/second at room temperature by using the test piece, is denoted as S1 [N/mm²].

Further, an adhesion strength [N/mm²] which is obtained in a case where the test piece is heated at 300°C for 30 minutes and then shearing adhesiveness to the copper substrate is measured at a rate of 300 µm/second at room temperature is denoted as S2 [N/mm²].

That is, it is considered that the easily dismantlable resin composition according to the present embodiment is easily subjected to peeling off, separation, or the like since the adhesion force of the cured product thereof to the other materials is reduced by heating, and thus the cured product is easily dismantled.

In the present embodiment, the adhesion strength ratio (S2/S1) is 0.30 or less, preferably 0.25 or less, more preferably 0.20 or less, still more preferably 0.15 or less, and even still more preferably 0.05 or less. Further, the adhesion strength ratio (S2/S1) is preferably 0.01 or less and may be 0.00.

From the viewpoint of further facilitating the dismantlement, the adhesion strength (S2) measured according to the above-described procedure is preferably 3.0 N/mm² or less, more preferably 2.0 N/mm² or less, still more preferably 1.0 N/mm² or less, and even still more preferably 0.5 N/mm² or less.

The lower limit value of the adhesion strength (S2) is not particularly limited, and the peeling-off from the copper substrate may already occur at a stage before the measurement of the adhesion strength. That is, it is intended to mean that the cured product of the test piece and the copper substrate are peeled off from each other during heating at 300°C for 30 minutes. In this case, the adhesion strength (S2) is 0 N/mm², and the adhesion strength ratio (S2/S1) is also 0.

From the viewpoint of obtaining favorable mechanical strength of the cured product, the adhesion strength (S1) measured according to the above procedure is preferably 8 N/mm² or more, more preferably 9 N/mm² or more, still more preferably 10 N/mm² or more, and even still more preferably 12 N/mm² or more.

On the other hand, the upper limit of the adhesion strength (S1) is not particularly limited and is appropriately set according to the use application; however, it may be set to, for example, 50 N/mm² or less.

In addition, a linear expansion coefficient α2 of a cured product in a temperature range of 190°C to 230°C, where the cured product is obtained by molding the easily dismantlable resin composition under conditions of 175°C, 6.9 MPa, and 120 seconds and then carrying out post-curing at 175°C for 4 hours, is preferably 46 ppm/°C or more, more preferably 50 ppm/°C or more, and still more preferably 55 ppm/°C or more.

As a result, the cured product and the other materials are easily subjected to peeling off, separation, or the like, and the ease of dismantlement can be improved.

In addition, a linear expansion coefficient α3 of a cured product in a temperature range of 250°C to 260°C, where the cured product is obtained by molding the easily dismantlable resin composition under conditions of 175°C, 6.9 MPa, and 120 seconds and then carrying out post-curing at 175°C for 4 hours, is preferably 80 ppm/°C or more, more preferably 100 ppm/°C or more, and still more preferably 200 ppm/°C or more.

As a result, the cured product and the other materials are easily subjected to peeling off, separation, or the like, and the ease of dismantlement can be improved.

In the present embodiment, the term "ease of dismantlement" is intended to mean that a cured product obtained by subjecting the easily dismantlable resin composition according to the present embodiment to thermal curing can be cracked by a simple method or can be dismantled by easily subjecting the cured product to crushing, separation, or the like. For example, ease of dismantlement is obtained by being capable of easily peeling off a cured product of the easily dismantlable resin composition according to the present embodiment from a material (a sealed material or the like) in the cured product. That is, the cured product can be dismantled even without applying such an excessive external stress that applies a load to a material contained in the cured product or carrying out a chemical treatment using a chemical or the like.

The easily dismantlable resin composition having an adhesion strength according to the present embodiment can be realized by the selection of various components constituting the easily dismantlable resin composition, the adjustment of the content thereof, or the like. Specific examples thereof include the control of the curability of the thermosetting resin (A) and the curing agent (B), the selection of the thermally expansible inorganic material (C) described later, the adjustment of the content of the thermally expansible inorganic material (C), the inorganic filler (D), and the flame retardant.

Hereinafter, components contained in the resin composition according to the present embodiment will be described.

### [Thermosetting resin (A)]

The resin composition according to the present embodiment contains a thermosetting resin (A).

Examples of the thermosetting resin (A) include one or two or more resins selected from a phenol resin, an epoxy resin, a phenoxy resin, a polyimide resin, a benzoxazine resin, an unsaturated polyester resin, a melamine resin, a silicone resin, a cyanate resin, a maleimide resin, a cyanate resin, and an acrylic resin. As these thermosetting resins, a monomer, an oligomer, and a polymer, which have two or more reactive functional groups in one molecule, can be used in general, and the molecular weight or molecular structure thereof is not particularly limited.

As the epoxy resin, a monomer, an oligomer, or a polymer, which has two or more epoxy groups in one molecule, can be used in general, and the molecular weight or molecular structure thereof is not particularly limited.

Specific examples of the epoxy resin include one or two or more selected from a novolac-type epoxy resin such as a phenol novolac-type epoxy resin or a cresol novolac-type epoxy resin; a bisphenol-type epoxy resin such as a bisphenol A-type epoxy resin or a bisphenol F-type epoxy resin; an aromatic glycidylamine-type epoxy resin such as N,N-diglycidylaniline, N,N-diglycidyltoluidine, a diaminodiphenylmethane-type glycidylamine, or an aminophenol-type glycidylamine; a hydroquinone-type epoxy resin; a biphenyl-type epoxy resin; a stilbene-type epoxy resin; a triphenolmethane-type epoxy resin; a triphenolpropane-type epoxy resin; an alkyl-modified triphenolmethane-type epoxy resin; a triazine nucleus-containing epoxy resin; a dicyclopentadiene-modified phenol-type epoxy resin; a naphthol-type epoxy resin; a naphthalene-type epoxy resin; a naphthylene ether-type epoxy resin; and an aralkyl-type epoxy resin or the like such as a phenol aralkyl-type epoxy resin having a phenylene and/or biphenylene skeleton or a naphthol aralkyl-type epoxy resin having a phenylene and/or biphenylene skeleton, or an aliphatic epoxy resin such as an alicyclic epoxy such as vinylcyclohexene dioxide, dicyclopentadiene oxide, or an alicyclic diepoxy adipate.

Among these, the thermosetting resin (A) is preferably an epoxy resin.

The content of the thermosetting resin (A) is preferably 1% by mass or more and 50% by mass or less, more preferably 2% by mass or more and 30% by mass or less, and still more preferably 5% by mass or more and 20% by mass or less with respect to the total amount of the resin composition.

In a case where the content of the thermosetting resin (A) is equal to or more than the above-described lower limit value, the fluidity of the resin composition and the moldability can be more effectively improved. In addition, in a case where the content of the thermosetting resin (A) is set to be equal to or smaller than the above-described upper limit value, the curability can be improved, and a favorable cured product can be obtained.

### [Curing agent (B)]

The curing agent (B) according to the present embodiment is selected according to the kind of the thermosetting resin (A) and is not particularly limited as long as it reacts with the thermosetting resin. Specific examples of the curing agent (B) include a polyaddition-type curing agent, a catalyst-type curing agent, and a condensation-type curing agent.

Specific examples of the curing agent (B) include a phenol-based curing agent, amines, a polyoxystyrene such as polyparaoxystyrene, an acid anhydride including an alicyclic acid anhydride such as hexahydrophthalic anhydride (HHPA) or methyltetrahydrophthalic anhydride (MTHPA), an aromatic acid anhydride such as trimellitic anhydride (TMA), pyromellitic anhydride (PMDA), or benzophenonetetracarboxylic acid (BTDA), and the like, a polymercaptan compound such as a polysulfide, a thioester, or thioether, an isocyanate compound such as an isocyanate prepolymer or a blocked isocyanate, and organic acids such as a carboxylic acid-containing polyester resin.

Specific examples of the phenol-based curing agent include one or two or more selected from a novolac-type phenol resin such as a phenol novolac resin, a cresol novolac resin, a naphthol novolac resin, an amino triazine novolac resin, a novolac resin, or a trisphenylmethane-type phenol novolac resin; a modified phenol resin such as a terpene-modified phenol resin or a dicyclopentadiene-modified phenol resin; an aralkyl-type resin such as a phenol aralkyl resin having a phenylene skeleton and/or a biphenylene skeleton, or a naphthol aralkyl resin having a phenylene skeleton and/or a biphenylene skeleton; a bisphenol compound such as bisphenol A or bisphenol F; a resole-type phenol resin.

In addition, from the viewpoint of curability, it is suitable that the hydroxyl group equivalent of the phenol resin-based curing agent is set to, for example, 90 g/eq or more and 250 g/eq or less.

Specific examples of the above-described amines include one or two or more selected from polyamine compounds including aliphatic polyamines such as diethylenetriamine (DETA), triethylenetetramine (TETA), and methaxylenediamine (MXDA), and aromatic polyamines such as diaminodiphenylmethane (DDM), m-phenylenediamine (MPDA), and diaminodiphenylsulfone (DDS), as well as dicyandiamide (DICY), an organic acid dihydrazide, and the like; acid anhydrides including an alicyclic acid anhydride such as hexahydrophthalic anhydride (HHPA) or methyltetrahydrophthalic anhydride (MTHPA), an aromatic acid anhydride such as trimellitic anhydride (TMA), pyromellitic anhydride (PMDA), or benzophenonetetracarboxylic acid (BTDA), and the like.

In the present embodiment, in a case where an epoxy resin is used as the thermosetting resin (A), it is preferable to combine a phenol-based curing agent as the curing agent (B).

The content of the curing agent (B) is preferably 5 to 50 parts by mass and more preferably 10 to 30 parts by mass with respect to 100 parts by mass of the thermosetting resin (A).

In addition, the content of the thermosetting resin (A) and the curing agent (B) is appropriately set according to the thermosetting resin (A) and the curing agent (B). For example, a phenol-based curing agent as the curing agent (B) and an epoxy resin as the thermosetting resin (A) are adjusted so that an equivalent ratio (EP)/(OH) of the number of epoxy groups (EP) in the total thermosetting resin to the number of phenolic hydroxyl groups (OH) in the total phenol resin is preferably 0.8 or more and 1.6 or less, more preferably 0.9 or more and 1.3 or less, and still more preferably 1.0 or more and 1.2 or less. In a case where the equivalent ratio is within the above-described range, the curing characteristics of the obtainable resin composition according to the present embodiment can be made favorable.

The resin composition according to the present embodiment may further contain the following components.

### [Thermally expansible inorganic material (C)]

The thermally expansible inorganic material (C) refers to an inorganic material that undergoes phase conversion by heating and causes volume expansion. By using the thermally expansible inorganic material (C), a cured product of the resin composition according to the present embodiment can be easily dismantled by heating. That is, since the thermally expansible inorganic material (C) dispersed in the inside of the cured product undergoes volume expansion by heating, the cured product can be destroyed from the inside, and the cured product can be easily dismantled.

Examples of the thermally expansible inorganic material (C) include one or two or more selected from crystalline silica, crystalline aluminum phosphate, and derivatives.

The crystalline silica (silicon dioxide; SiO₂) has a crystal structure of a quartz type, a tridymite type, a cristobalite type, or the like. In addition, it is known that, similar to crystalline silica, crystalline aluminum phosphate also has a crystal structure of a berlinite type, a tridalphite type, or a crystalphite type, which correspond respectively to those of the crystal structure of silica. Carnegieite is such as one that is obtained by substituting a part of Si⁴⁺ of cristobalite-type silica with Al³⁺ and Na⁺, and it is one kind of crystalline silica (cristobalite) derivative.

Both the crystalline silica and the crystalline aluminum phosphate undergo an α-β transition (phase transition) at a specific temperature in the respective crystal structures, which results in volume expansion. For example, it is known that the cristobalite-type silica undergoes an α-β transition and undergoes volume expansion in a temperature range of 200°C to 250°C, the tridymite-type silica undergoes an α-β transition and undergoes volume expansion in a temperature range of 120°C to 200°C, the berlinite-type aluminum phosphate undergoes an α-β transition (phase transition) and undergoes volume expansion in a temperature range of 550°C to 600°C, and the crystalphite-type aluminum phosphate undergoes an α-β transition and undergoes volume expansion in a temperature range of 300°C to 350°C. In addition, a transition may occur between the crystal structures under predetermined conditions such as heating, which also causes volume expansion.

The selection of the thermally expansible inorganic material (C) regarding what kind of crystal structure is selected can be carried out from the viewpoint of the heating temperature, the expansion rate, the transition rate, and the like required for volume expansion. In addition, the thermally expansible inorganic material (C) according to the present embodiment may be a mixture of those having crystal structures different from each other.

In the present embodiment, from the viewpoint of obtaining ease of dismantlement at a low temperature, the thermally expansible inorganic material (C) is preferably cristobalite-type silica or tridymite-type silica, and from the viewpoint of availability, handleability, and the like, the thermally expansible inorganic material (C) is more preferably cristobalite-type silica.

The content of the thermally expansible inorganic material (C) is preferably 5% by mass or more, more preferably 10% by mass or more, still more preferably 20% by mass or more, and even still more preferably 40% by mass or more with respect to the total amount of the resin composition. As a result, the dismantlability by heating can be improved.

The content of the thermally expansible inorganic material (C) is preferably 98% by mass or less, more preferably 90% by mass or less, and still more preferably 80% by mass or less with respect to the total amount of the resin composition. As a result, the moldability of the cured product can be improved.

### [Inorganic filler (D))

The resin composition according to the present embodiment may contain an inorganic filler (D) excluding the above-described thermally expansible inorganic material (C).

The inorganic filler (D) is used for increasing mechanical strength or imparting heat resistance, flame retardancy, or the like depending on the use application of the cured product.

Specific examples of the inorganic filler (D) include silicates such as talc, baked clay, unbaked clay, mica, and glass; oxides such as molten silica, spherical silica, crushed silica, titanium oxide, and boehmite; carbonates such as calcium carbonate, magnesium carbonate, and hydrotalcite; hydroxides such as aluminum hydroxide, magnesium hydroxide, and calcium hydroxide; sulfates or bisulfites such as barium sulfate, calcium sulfate, and calcium bisulfate; borates such as zinc borate, barium metaborate, aluminum borate, calcium borate, and sodium borate; nitrides such as aluminum nitride, boron nitride, silicon nitride, and carbon nitride; and titanates such as strontium titanate and barium titanate. One kind of these may be used alone, or two or more kinds thereof may be used in combination.

The average particle diameter D50 of the inorganic filler (D) is preferably 0.01 µm or more, more preferably 0.5 µm or more, and still more preferably 1 µm or more. As a result, the strength can be improved.

On the other hand, the average particle diameter D50 of the inorganic filler (D) is preferably 75 µm or less, more preferably 40 µm or less, still more preferably 20 µm or less, still more preferably 10 µm or less, and even still more preferably 8 µm or less.

In addition, in a case where the average particle diameter of the inorganic filler is set within the above-described range, the filling properties are improved. The average particle diameter D50 can be an average particle diameter in terms of volume conversion (accumulation: 50%), which is measured by a commercially available laser-type particle size distribution analyzer.

In addition, in the volume-based particle size distribution of the inorganic filler (D), which is obtained with a laser-type particle size distribution analyzer, the inorganic filler (D) may have two or more peaks. In other words, it is preferable that two or more kinds of inorganic fillers (D) having particle diameters different from each other are contained. As a result, particles having a small particle diameter are likely to enter a gap between particles having a large particle diameter, and thus the filling properties are likely to be improved.

The content of the inorganic filler (D) is appropriately set according to the use application; however, it is preferably 1% to 45% by mass, more preferably 10% to 40% by mass, and still more preferably 20% to 35% by mass with respect to the total amount of the resin composition.

In a case where the content of the inorganic filler (D) is set to be equal to or larger than the above-described lower limit value, the storage stability and the curability of the cured product can be improved. In addition, in a case where the content of the inorganic filler (D) is set to be equal to or smaller than the above-described upper limit value, the ease of dismantlement and the favorable fluidity of the resin composition can be obtained, and the moldability can be effectively improved.

### [Coupling agent]

In a case of containing the thermally expansible inorganic material (C) or the inorganic filler (D), the resin composition according to the present embodiment may contain a coupling agent. As a result, the aggregation of the thermally expansible inorganic material (C) and the inorganic filler (D) can be suppressed, and favorable fluidity can be obtained.

Examples of the coupling agent include various silane-based compounds such as epoxysilane, mercaptosilane, aminosilane, an alkyl silane, ureide silane, and vinylsilane, and publicly known coupling agents such as a titanium-based compound, an aluminum chelate, and an aluminum-zirconium-based compound.

Specific examples thereof include silane-based coupling agents such as vinyltrichlorosilane, vinyltrimethoxysilane, vinyltriethoxysilane, vinyltris(β-methoxyethoxy)silane, γ-methacryloxypropyltrimethoxysilane, β-(3,4-epoxycyclohexyl)ethyltrimethoxysilane, γ-glycidoxypropyltrimethoxysilane, γ-glycidoxypropyltriethoxysilane, γ-glycidoxypropyl methyldimethoxysilane, γ-methacryloxypropylmethyldiethoxysilane, γ-methacryloxypropyltriethoxysilane, vinyltriacetoxysilane, γ-mercaptopropyltrimethoxysilane, γ-aminopropyltriethoxysilane, γ-anilinopropyltrimethoxysilane, γ-anilinopropylmethyldimethoxysilane, γ-[bis(β-hydroxyethyl)]aminopropyltriethoxysilane, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-phenyl-γ-aminopropyltrimethoxysilane, γ-(β-aminoethyl)aminopropyldimethoxymethylsilane, N-(trimethoxysilylpropyl)ethylenediamine, N-(dimethoxymethylsilylisopropyl)ethylenediamine, methyltrimethoxysilane, dimethyldimethoxysilane, methyltriethoxysilane, N-β-(N-vinylbenzylaminoethyl)-γ-aminopropyltrimethoxysilane, γ-chloropropyltrimethoxysilane, hexamethyldisilane, vinyltrimethoxysilane, γ-mercaptopropylmethyldimethoxysilane, 3-isocyanatepropyltriethoxysilane, 3-acryloxypropyltrimethoxysilane, a hydrolysate of 3-triethoxysilyl-N-(1,3-dimethyl-butylidene)propylamine; and titanate-based coupling agents such as isopropyltriisostearoyl titanate, isopropyltris(dioctylpyrophosphate)titanate, isopropyltri(N-aminoethyl-aminoethyl)titanate, tetraoctylbis(ditridecylphosphite)titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, isopropyltrioctanoyl titanate, isopropyldimethacrylic isostearoyl titanate, isopropyltridodecylbenzenesulfonyl titanate, isopropylisostearoyl diacrylic titanate, isopropyltri(dioctyl phosphate)titanate, isopropyl tricumylphenyl titanate, and tetraisopropylbis(dioctyl phosphite) titanate. One kind of these may be used alone, or two or more kinds thereof may be used in combination.

The content of the coupling agent is not particularly limited; however, it is preferably 0.05% by mass or more and 3% by mass or less, and more preferably 0.1% by mass or more and 2% by mass or less with respect to the entirety of the resin composition.

In a case where the content of the coupling agent is set to be equal to or larger than the above-described lower limit value, the dispersibility of the inorganic filler in the resin composition can be made favorable. In addition, in a case where the content of the coupling agent is set to be equal to or smaller than the above-described upper limit value, the fluidity of the resin composition can be made favorable, and the improvement of the moldability can be achieved.

### [Curing accelerator]

The resin composition according to the present embodiment may contain a curing accelerator.

The curing accelerator typically accelerates the reaction between the thermosetting resin (A) and the curing agent (B).

Specific examples of the curing accelerator include phosphorus atom-containing compounds such as an organic phosphine, a tetra-substituted phosphonium compound, a phosphobetaine compound, an adduct of a phosphine compound and a quinone compound, and an adduct of a phosphonium compound and a silane compound; amidine-based compounds such as 1,8-diazabicyclo(5,4,0)undecene-7, and imidazole; tertiary amines such as benzyldimethylamine; nitrogen atom-containing compounds such as an amidinium salt and an ammonium salts; and phenol compounds such as phenol, bisphenol A, nonylphenol, and 2,3-dihydroxynaphthalene.

In addition, examples of the above-described organic phosphine include triphenylphosphine, tri-p-tolylphosphine, tetraphenylphosphonium tetraphenylborate, triphenylphosphine triphenylborane, and 1,2-bis-(diphenylphosphino)ethane. One kind of these may be used alone, or two or more kinds thereof may be used in combination.

The content of the curing accelerator is appropriately set according to the use application; however, it is preferably 0.1% to 5% by mass and more preferably 0.2% to 3% by mass with respect to the total amount of the resin composition.

In a case where the content of the curing accelerator is set to be equal to or larger than the above-described lower limit value, the resin composition is easily cured appropriately. On the other hand, in a case where the content of the curing accelerator is set to be equal to or smaller than the above-described upper limit value, the molten state can be maintained for a longer time, and a lower viscosity state can be maintained for a longer time.

### [Hydroxyl group-containing cyclic compound]

In a case of containing a curing accelerator, the resin composition according to the present embodiment may contain a compound in which two or more adjacent carbon atoms constituting an aromatic ring are each bonded to a hydroxyl group (hereinafter, also referred to as a "hydroxyl group-containing cyclic compound"). As a result, even in a case where a phosphorus atom-containing curing accelerator having no latency is used as the curing accelerator, a reaction during the melt-kneading of the resin composition can be suppressed, and thus a stable resin composition can be obtained. In addition, the hydroxyl group-containing cyclic compound also has the effect of lowering the melt viscosity of the resin composition and improving the fluidity.

As the hydroxyl group-containing cyclic compound, a monocyclic compound represented by General Formula (5) or a polycyclic compound represented by General Formula (6) can be used. These compounds may have a substituent other than the hydroxyl group.

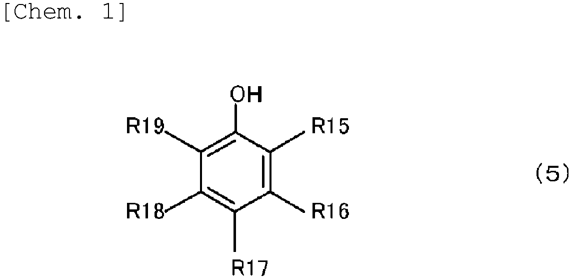

In General Formula (5), any one of R15 or R19 is a hydroxyl group, and the other is a hydrogen atom, a hydroxyl group, or a substituent other than a hydroxyl group. In addition, R16, R17, and R18 are a hydrogen atom, a hydroxyl group, or a substituent other than a hydroxyl group.

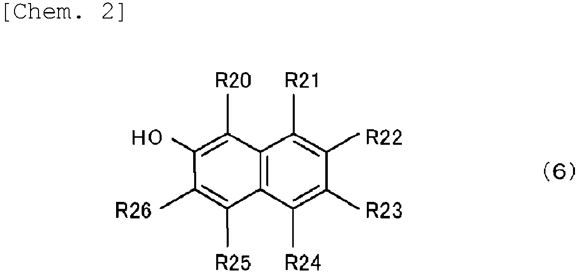

In General Formula (6), any one of R20 or R26 is a hydroxyl group, and the other is a hydrogen atom, a hydroxyl group, or a substituent other than a hydroxyl group. In addition, R21, R22, R23, R24, and R25 are a hydrogen atom, a hydroxyl group, or a substituent other than a hydroxyl group.

Specific examples of the monocyclic compound represented by General Formula (5) include catechol, pyrogallol, gallic acid, a gallic acid ester, and a derivative thereof.

In addition, specific examples of the polycyclic compound represented by General Formula (6) include 1,2-dihydroxynaphthalene, 2,3-dihydroxynaphthalene, and a derivative thereof. Among these, a compound in which two adjacent carbon atoms constituting an aromatic ring are each bonded to a hydroxyl group is preferable from the ease of control of fluidity and curability. In addition, in a case where the volatilization in the kneading step is taken into consideration, it is more preferable that the mother nucleus is a compound that has a naphthalene ring having a low volatility and high weighing stability. In this case, the hydroxyl group-containing cyclic compound can be, specifically, a compound having a naphthalene ring, for example, 1,2-dihydroxynaphthalene, 2,3-dihydroxynaphthalene, or a derivative thereof. One kind of these hydroxyl group-containing cyclic compounds may be used alone, or two or more kinds thereof may be used in combination.

The content of the hydroxyl group-containing cyclic compound is preferably 0.01% by mass or more, more preferably 0.03% by mass or more, and still more preferably 0.05% by mass or more with respect to the total value of 100% by mass of the resin composition. In a case where the content of the hydroxyl group-containing cyclic compound is within the above-described range, it is possible to obtain an effect of sufficiently reducing the viscosity and improving the fluidity of the resin composition. In addition, the content of the hydroxyl group-containing cyclic compound is preferably 2% by mass or less, more preferably 0.8% by mass or less, and still more preferably 0.5% by mass or less with respect to the total value of 100% by mass of the resin composition. In a case where the content of the hydroxyl group-containing cyclic compound is within the above-described range, there is less concern that the curability of the resin composition or physical properties of the cured product are deteriorated.

Further, the resin composition according to the present embodiment can further contain, for example, a flame retardant; a coloring agent such as carbon black; a mold releasing agent such as natural wax, synthetic wax, a higher fatty acid or a metal salt thereof, paraffin, or oxidized polyethylene; a stress-relief agent such as silicone oil or silicone rubber; an ion capturing agent such as a hydrous oxide of an element selected from hydrotalcites or magnesium, aluminum, bismuth, titanium, and zirconium; and various additives such as an adhesion imparting agent such as thiazoline, diazole, triazole, triazine, and pyrimidine, and an antioxidant.

Examples of the flame retardant include an inorganic flame retardant.

Specific examples of the inorganic flame retardant include aluminum hydroxide, magnesium hydroxide, zinc borate, zinc molybdate, phosphazene, and carbon black. As the flame retardant, one kind of flame retardant or two or more kinds of flame retardants among the above specific examples can be mixed. Among these, aluminum hydroxide is preferable from the viewpoint of obtaining flame retardance and ease of dismantlement.

In addition, aluminum hydroxide is dehydrated and decomposed by being exposed to a high temperature. Therefore, in a case where the structural body using the resin composition according to the present embodiment which contains aluminum hydroxide is heated to 200°C or higher, the structural body can be destroyed from the inside by the dehydration decomposition of aluminum hydroxide, and the structural body can be easily dismantled.

From the viewpoint of obtaining flame retardance, the lower limit of the content of aluminum hydroxide is preferably 1% by mass or more with respect to the total amount of the resin composition, and from the viewpoint of obtaining ease of dismantlement in addition to the flame retardance, the lower limit thereof is preferably 40% by mass or more and more preferably 50% by mass or more.

On the other hand, the upper limit of the content of aluminum hydroxide can be appropriately set according to the use application of the resin composition, and it may be, for example, 60% by mass or less.

In addition, from the viewpoint of maintaining favorable moldability of the resin composition while obtaining the ease of dismantlement due to aluminum hydroxide, the total content of the thermally expansible inorganic material (C), the inorganic filler (D), and aluminum hydroxide is preferably 60% to 95% by mass, more preferably 70% to 90% by mass, and still more preferably 75% to 85% by mass with respect to the total amount of the resin composition.

### [Production method for resin composition]

Next, a description will be made regarding a production method for the resin composition according to the present embodiment.

The production method for the resin composition according to the present embodiment is not particularly limited; however, for example, a thermosetting component and each of optional components are mixed using a mixer or the like, and then the resultant mixture is kneaded by being melted and heated at a temperature of about 90°C to 120°C using a heating kneader, a thermal roll, an extruder, or the like. Next, the obtained kneaded product is cooled and pulverized to obtain a powdery or granular resin composition. As necessary, the resin composition may be subjected to tableting molding into a tablet shape after the pulverization, or it may be formed into a sheet shape by, for example, vacuum lamination molding or compression molding after the pulverization.

In addition, for example, a thermosetting component and each of optional components may be dissolved, mixed, and stirred in a solvent using various mixers, such as an ultrasonic dispersion-type mixer, a high-pressure impact dispersion-type mixer, a high-speed rotary dispersion-type mixer, a bead mill-type mixer, a high-speed shear dispersion-type mixer, and rotating and revolution dispersion-type mixer, whereby a varnish-like resin composition may be prepared.

Specific examples of the solvent include acetone, methyl ethyl ketone, methyl isobutyl ketone, toluene, ethyl acetate, heptane, cyclohexane, cyclohexanone, tetrahydrofuran, dimethylformamide, dimethylacetamide, dimethyl sulfoxide, ethylene glycol, a cellosolve-based solvent, a carbitol-based solvent, anisole, and N-methylpyrrolidone. One kind of solvent may be used alone, or two or more kinds thereof may be used in combination.

### 2. Structural body

The structural body according to the present embodiment includes a cured product of the easily dismantlable resin composition, which has been described above. The cured product is obtained by thermally curing the resin composition according to the present embodiment at 100°C to 200°C for 10 to 900 seconds.

The structural body can be widely applied to, for example, a composite member for a transport machine such as an automobile, a railway, a ship, or an aircraft, a semiconductor chip, a semiconductor element, a semiconductor device including a printed wiring board, a composite member for a factory equipment such as a working robot, an electric circuit display device, an information communication terminal, a light emitting diode, an electronic device such as a physical battery or a chemical battery, a composite member for civil engineering and construction, and a composite member for sports and recreation. Among these, from the viewpoint of the importance of the response to environmental issues or the like, a composite member for a transport machine such as an automobile, a semiconductor device, or the like is suitable. Specific examples of the semiconductor device include a semiconductor device including a semiconductor element and a sealing material that seals the semiconductor element, where the sealing material is made of the cured product of the resin composition according to the present embodiment.

A sealing method and the like are not particularly limited, and a publicly known method can be used.

Among these, specifically, it is preferable to apply the present invention to a rotor, a stator, and a power module. Details thereof will be described later.

### <Rotor>

The rotor according to the present embodiment includes a cured product of the easily dismantlable resin composition, which has been described above. The cured product is obtained by thermally curing the resin composition according to the present embodiment at 100°C to 200°C for 10 to 900 seconds.

Hereinafter, an example of the rotor according to the present embodiment will be described.

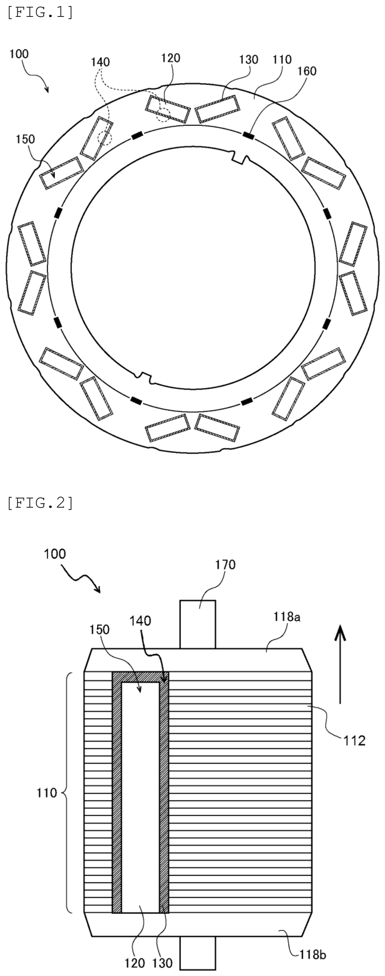

FIG. 1 is a plan view showing a rotor 100 according to the present embodiment. FIG. 2 is a cross-sectional view showing the rotor 100 shown in FIG. 1. It is noted that FIG. 1 and FIG. 2 are schematic views showing the rotor 100, and the configuration of the rotor 100 according to the present embodiment is not limited to those shown in FIG. 1 and FIG. 2.

The rotor 100 includes a rotor core 110, a magnet 120, and a fixing member 130. The rotor core 110 includes a hole part 150. The magnet 120 is inserted into the hole part 150. The fixing member 130 is provided in a spacing part 140 between the hole part 150 and the magnet 120.

The fixing member 130 is formed from the easily dismantlable resin composition which has been described above.

The rotor 100 according to the present embodiment constitutes, for example, a motor mounted in an automobile or the like. The motor includes the rotor 100 and a stator provided around the rotor 100. The stator is composed of a stator core and a coil wound around the stator core.

As shown in FIG. 2, the rotor 100 is attached to a rotating shaft 170. The rotation generated by the rotor 100 is transmitted to the outside through the rotating shaft 170.

The rotor core 110 includes a through-hole for inserting the rotating shaft 170. The rotor core 110 is provided to be fixed to the rotating shaft 170 that is inserted into the through-hole. A shape of the rotor core 110 is not particularly limited, and the shape thereof is, for example, circular or polygonal when seen in a plan view.

As shown in FIG. 2, the rotor core 110 is formed by laminating a plurality of electromagnetic steel plates 112 which are thin plate-shaped magnetic materials. The electromagnetic steel plate 112 is composed of, for example, iron or an iron alloy.

In addition, as shown in FIG. 2, end plates 118a and 118b are provided at both ends of the rotor core 110 in the axial direction. That is, the end plate 118a is provided on the laminated electromagnetic steel plate 112. In addition, the end plate 118b is provided under the laminated electromagnetic steel plate 112. The end plate 118a and the end plate 118b are fixed to the rotating shaft 170 by, for example, welding or the like.

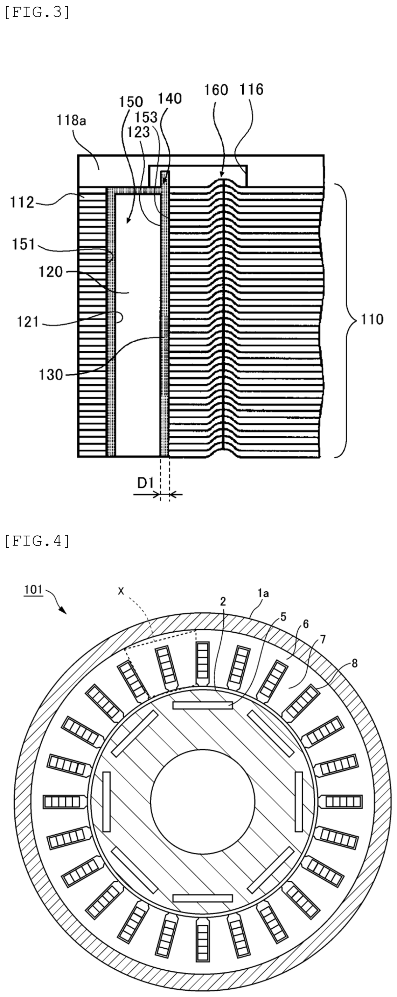

FIG. 3 is an enlarged cross-sectional view of the rotor 100 shown in FIG. 1. As shown in FIG. 3, a caulking part 160 is formed in the plurality of electromagnetic steel plates 112. The caulking part 160 is composed of, for example, a protruding part formed on the electromagnetic steel plate 112. The electromagnetic steel plates 112 are bonded to each other by the caulking part 160.

In addition, the end plate 118a includes, for example, a groove part 116 for avoiding interference with the caulking part 160 that protrudes from the electromagnetic steel plate 112 or the fixing member 130 that protrudes on the electromagnetic steel plate 112.

It is noted that the fixing member 130 that protrudes on the electromagnetic steel plate 112 is a portion formed by curing the easily dismantlable resin composition that remains on the electromagnetic steel plate 112, in a case where the easily dismantlable resin composition described above is injected into the spacing part 140.

As shown in FIG. 1, the rotor core 110 includes a plurality of hole parts 150. The plurality of the hole parts 150 are arranged in the rotor core 110 to be point-symmetric with the axial center of the rotating shaft 170 as a center.

As shown in FIG. 1, in the rotor 100 according to the present embodiment, a plurality of groups of hole parts consisting of, for example, two adjacent hole parts 150 are arranged along a peripheral edge part of the rotating shaft 170. The plurality of groups of hole parts are provided, for example, to be spaced apart from each other. The two hole parts 150 constituting one group of hole parts are arranged, for example, in a V shape when seen in a plan view. In this case, the two hole parts 150 constituting one group of hole parts are provided, for example, such that each of the end parts facing each other is located on the rotating shaft 170 side. In addition, the two hole parts 150 constituting one group of hole parts are provided, for example, to be spaced apart from each other.

### <Stator>

The stator according to the present embodiment includes a cured product of the easily dismantlable resin composition, which has been described above. The cured product is obtained by thermally curing the resin composition according to the present embodiment at 100°C to 200°C for 10 to 900 seconds.

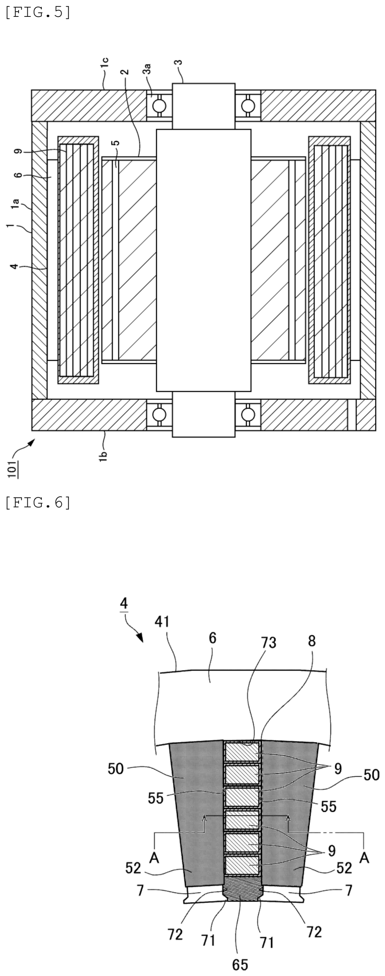

FIG. 4 schematically shows a cross-sectional view of a motor 101 in a direction perpendicular to a rotating shaft direction. FIG. 5 schematically shows a cross-sectional view of the motor 101 in the rotating shaft direction. FIG. 6 is an enlarged view showing the periphery of a slot (area X in FIG. 4) and schematically shows a cross-sectional view of a portion where a coil 9 protrudes from an end part of a slot 8.

The motor 101 includes a case 1, and a rotor 2, a stator 4, and a coil 9 accommodated in the inside of the case 1.

The case 1 includes a cylindrical part 1a and side plate parts 1b and 1c that close both ends of the cylindrical part 1a in an axial direction. As a material of the case 1, for example, an aluminum alloy (casting product), a resin material, or a combination thereof can be used.

As shown in FIG. 4, the rotor 2 is accommodated in the inside of the case 1. As shown in FIG. 5, a rotating shaft 3 is attached to a center of the rotor 2 as an output shaft. Both ends of the rotating shaft 3 are supported by the side plate parts 1b and 1c through bearings 3a. In this manner, the rotor 2 is freely rotatable about the rotating shaft 3.

A permanent magnet 5 is internally mounted in the rotor 2. Specifically, as shown in FIG. 4, a plurality of (here, eight) permanent magnets 5 are arranged on the same circumference at equal intervals. In this case, the permanent magnets 5 are installed such that the magnetic poles of adjacent permanent magnets 5 are different from each other.

As shown in FIG. 5, a cylindrical stator 4 is arranged and fixed on the inner peripheral side of the cylindrical part 1a to surround the outer periphery of the rotor 2. A minute gap (air gap) is provided between the inner peripheral surface of the stator 4 and the outer peripheral surface of the rotor 2.

A stator core 41 is provided by laminating and tightly fixing a plurality of electromagnetic steel plates in the axial direction, and is provided with a yoke part 6 that is provided annularly as viewed from an end part in the axial direction as shown in FIG. 4, and with a plurality of teeth parts 7 extending from the yoke part 6 toward the rotor 2 side (inner peripheral side). The plurality of teeth parts 7 are provided by being arranged at equal intervals in the circumferential direction. Here, as shown in FIG. 4, twenty four teeth parts 7 are provided. A slot 8 is provided between each of the teeth parts 7. In addition, the teeth parts 7 are provided with a resin layer 50 that covers the teeth parts 7 in a small thickness by causing a resin composition to circle around the teeth parts 7.

The coil 9 has a rectangular U-shape and is wound to be accommodated in two slots 8 spaced across the teeth part 7. Here, the coil 9 is accommodated in a liner member 20 arranged in the slots 8 in a distributed winding manner (FIG. 4). The coil 9 has a first coil end and a second coil end. The first coil end protrudes to one side of the stator core 41 in the axial direction. The second coil end protrudes to the other side of the stator core 41 in the axial direction. That is, the coil 9 has a pair of coil ends that respectively protrude toward both sides of the stator core 41 in the axial direction.

The coil 9 is formed of, for example, a wire conductor in which a conductor such as copper, aluminum, or iron is in a wire shape.

The teeth parts 7 are provided in correspondence with the permanent magnets 5 of the rotor 2 described above, and by sequentially exciting the coils 9, the rotor 2 rotates due to attraction and repulsion with the permanent magnets 5 in correspondence with this sequential exciting.

The teeth part 7 has a large width in the circumferential direction on the outer peripheral side and has a small width on the inner peripheral side. The teeth part 7 is tapered toward the inner peripheral side. At the end part on the inner peripheral side of the teeth part 7, teeth part tips 71 are formed to face each other in the circumferential direction to reduce the width of the slot 8.

The slot 8 is a space between adjacent teeth parts 7 and is provided such that wall surfaces 72 of the teeth part 7 facing each other in the radial direction are parallel surfaces, as shown in FIG. 6. A space between the teeth part tips 71 forms an opening on the inner peripheral side of the slot 8. The slot 8 is provided with a plurality of coils 9 arranged on the outer peripheral side (on the side of the yoke part 6) and with a resin sealing part 65 provided on the inner peripheral side (on the side of the teeth part tip 71).

As shown in FIG. 6, the resin sealing part 65 is provided on the inner peripheral side of the slot 8 (on the side of the teeth part tip 71). The resin sealing part 65 may be provided by insert molding or may be provided as a separate component.

As the resin material to be used for the resin sealing part 65, the above-described easily dismantlable resin composition is used.

In one embodiment, the resin sealing part 65 is provided only within the slot 8 to cover the coil 9. In another embodiment, the resin sealing part 65 is provided to cover the coil 9 in the slot 8 and at the same time, to cover one coil end of a pair of coil ends. In other words, the resin sealing part 65 is provided to cover any one of the first and second coil ends. In still another embodiment, the resin sealing part 65 is provided to cover the coil 9 in the slot 8 and at the same time, to cover both of the pair of coil ends. In other words, the resin sealing part 65 is provided to cover both the first and second coil ends.

### <Power module>

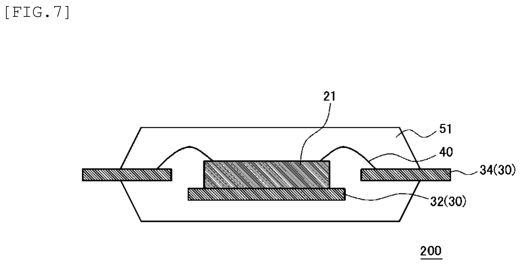

FIG. 7 is a cross-sectional view showing a configuration of a power module (semiconductor device) 100 in the present embodiment. The power module 100 shown in FIG. 7 includes a semiconductor element 21 that is mounted on a substrate 30 and a sealing material 51 that seals the semiconductor element 21.

A lead frame is used as the substrate 30. The lead frame is made of metal and is composed of, for example, copper.

The semiconductor element 21 is a power semiconductor element and is preferably a power semiconductor element that satisfies any one of the following conditions (a) to (d).
(a) A semiconductor element having a power consumption of 2.0 W or more
(b) A semiconductor element consisting of one or more semiconductors selected from the group consisting of SiC, GaN, Ga₂O₃, and diamond
(c) A semiconductor element having a voltage of 1.0 V or more
(d) A semiconductor element having a power density of 10 W/cm³ or more

The power consumption of the semiconductor element 21 is, for example, 2.0 W or more, which is described in the above-described condition (a), preferably 3.0 W or more. In addition, it may be, for example, 4.0 W or less. The voltage of the semiconductor element 21 is, for example, 1.0 V or more, which is described in the above-described condition (c), and it is preferably 3.0 V or more. In addition, it may be, for example, 5.0 V or more. In addition, the voltage of the semiconductor element 21 may be, for example, 100 V or less. In addition, the power density of the semiconductor element 21 is, for example, 10 W/cm³ or more, which is described in the above-described condition (d), and it is preferably 20 W/cm³ or more. In addition, it may be, for example, 30 W/cm³ or more. In addition, the power density of the semiconductor element 21 may be, for example, 200 W/cm³ or less. In addition, the semiconductor element 21 can be operated in a high temperature environment of, for example, 200°C or higher, and preferably 260°C or higher.

The semiconductor element 21 is preferably a power semiconductor element provided on the substrate 30, and it includes one or two or more electronic components selected from the group consisting of a rectifier diode, a power transistor, a power MOSFET, an insulated gate bipolar transistor (IGBT), a thyristor, a gate turn-off thyristor (GTO), and a triac.

For example, the semiconductor element 21 is mounted on a die pad 32 of the substrate 30 and is electrically connected to an outer lead 34 through a wire 40.

The sealing material 51 seals the semiconductor element 21 to cover a surface of the semiconductor element 21 on a side opposite to the other surface facing the substrate 30. The sealing material 51 according to the present embodiment is composed of the cured product of the easily dismantlable resin composition described above. For example, the sealing material 51 can be formed by sealing and molding the easily dismantlable resin composition with a publicly known method such as a transfer molding method and a compression molding method.

### 3. Dismantling method

A dismantling method for the structural body according to the present embodiment includes a step of heating the structural body to 200°C or higher to dismantle the cured product of the easily dismantlable resin composition.

Since the cured product can be dismantled by heating, a machine or instrument for destroying the cured product is not necessary, and, in addition, it is possible to suppress the occurrence of contamination, corrosion, and the like in a case where a chemical agent or the like is used.

The heating temperature can be appropriately set depending on the kind of the thermally expansible inorganic material (C) and the like. However, it is preferably 250°C or higher and more preferably 300°C or higher from the viewpoint of improving the ease of dismantlement, and in addition, from the viewpoint of shortening the time until dismantlement, the temperature may be further increased depending on the use application of the structural body. Specifically, in a case where the structural body is a rotor, the temperature may be set to 350°C or higher in order to correspond to the demagnetization of the magnet.

On the other hand, the heating temperature is preferably 600°C or lower and more preferably 500°C or lower from the viewpoint of reducing the thermal load and the environmental load of the structural body.

The heating method is not particularly limited, and a publicly known method can be used.

### 4. Recycling method

The recycling method according to the present embodiment is a recycling method for a material that constitutes the structural body described above, where the recycling method includes a step of heating the structural body to 200°C or higher to dismantle the cured product of the easily dismantlable resin composition and a step of recovering the material from the structural body.

As a result, the material that has been used for the structural body can be reused. The step of dismantling the cured product is the same as the method described in the dismantling method.

In addition, a method of recovering the material from the structural body is not particularly limited as long as the quality of the material is not deteriorated; however, examples thereof include a method of destroying a structural body together with a cured product that has become brittle due to the dismantling, thereby recovering the material.

In a case where the structural body is a rotor, the material to be recovered from the rotor is not particularly limited as long as it is resistant to heat, and examples thereof include metals (electromagnetic steel plate) and a permanent magnet.

In a case where the structural body is a stator, the material to be recovered from the stator is not particularly limited as long as it is resistant to heat, and examples thereof include a coil and metals (electromagnetic steel plate).

In a case where the structural body is a power module, the material to be recovered from the power module is not particularly limited as long as it is resistant to heat, and examples thereof include a metallic lead frame.

As described above, the embodiments of the present invention have been described above; however, these are only examples of the present invention, and thus various configurations other than those above-described can be also employed.

### Examples

Hereinafter, the present invention will be described in detail with reference to examples. However, the content of the present invention is not limited to the examples.

### <Preparation of resin composition>

Using a raw material shown below, each of components was mixed according to a proportion in terms of solid content shown in Table 1 to obtain a mixture. The mixing was carried out at normal temperature using a Henschel mixer. Thereafter, the obtained mixture was subjected to roll kneading at 90°C to 120°C to obtain a kneaded product. The obtained kneaded product was cooled and then pulverized to obtain each resin composition.

### [Raw material]

### (Thermosetting resin (A))

· Epoxy resin 1: Biphenylene skeleton-containing phenol aralkyl-type epoxy resin (NC3000, manufactured by Nippon Kayaku Co., Ltd.)

### (Curing agent (B))

· Curing agent 1: Biphenylene skeleton-containing phenol aralkyl-type resin (MEH-7851SS, manufactured by MEIWA PLASTIC INDUSTRIES, LTD.)
· Curing agent 2: Biphenylene skeleton-containing phenol aralkyl-type resin (GPH-65, manufactured by Nippon Kayaku Co., Ltd.)

### (Thermally expansible inorganic material (C))

· Thermally expansible inorganic material 1: Cristobalite-type silica (Cristobalite, manufactured by Micron Co., Ltd.)

### (Inorganic filler (D))

· Inorganic filler 1: Fused spherical silica TS-6026, manufactured by Micron Co., Ltd. (average particle diameter D50: 9 µm)
· Inorganic filler 2: Fused spherical silica SC-2500-SQ, manufactured by ADMATECHS COMPANY LIMITED (average particle diameter D50: 0.6 um)
· Inorganic filler 3: Fused spherical silica SC-5500-SQ, manufactured by ADMATECHS COMPANY LIMITED (average particle diameter D50: 1.6 µm)

### (Curing accelerator)

· Curing accelerator 1: Tetraphenylphosphonium bis(naphthalene-2,3-dioxy)phenylsilicate

### (Others)

· Coloring agent: Carbon black (CARBON #5, manufactured by Mitsubishi Chemical Corporation)
· Coupling agent: N-phenyl-3-aminopropyltrimethoxysilane (CF-4083, manufactured by DuPont Toray Specialty Materials K.K.)
· Mold releasing agent: synthetic wax (manufactured by Clariant, WE-4)
· Stress-relief agent: silicone oil (FZ-3730, manufactured by DuPont Toray Specialty Materials K.K.)
· Ion capturing agent: Magnesium hydroxide carbonate hydrate (DHT-4H, manufactured by Kyowa Chemical Industry Co., Ltd.)
· Flame retardant: Aluminum hydroxide (CL-303, manufactured by Sumitomo Chemical Co., Ltd.)

### <Evaluation and measurement>

### (1) Adhesion strength

Each of the obtained easily dismantlable resin compositions was molded on a copper substrate ("EFTEC 64-T", a copper plate obtained by subjecting a copper plate manufactured by FURUKAWA ELECTRIC Co., Ltd. to Cu strike plating) under conditions of 175°C, 6.9 MPa, and 120 seconds, and further subjected to post-curing at 175°C for 4 hours to obtain a test piece.

An adhesion strength [N/mm²], which was obtained in a case where shearing adhesiveness to the copper substrate was measured at a rate of 300 µm/second at room temperature by using the test piece, was denoted as S1 [N/mm²].

Further, an adhesion strength [N/mm²], which was obtained in a case where the test piece was heated at 300°C for 30 minutes and then shearing adhesiveness to the copper substrate was measured at a rate of 300 µm/second at room temperature, was denoted as S2 [N/mm²].

The results are shown in Table 1.

### (2) TMA measurement (glass transition temperature and linear expansion coefficient)

Each of the obtained easily dismantlable resin compositions was molded on a copper substrate under conditions of 175°C, 10 MPa, and 120 seconds and then subjected to post-curing at 175°C for 4 hours to obtain a test piece.

Using the test piece, the measurement was carried out with a thermomechanical analyzer (manufactured by Seiko Instruments Inc., TMA/SS6000) in a measurement temperature range of 25°C to 320°C at a temperature rising rate of 5 °C/min. From the measurement result, the glass transition temperature Tg (°C) was calculated. α1 is a linear expansion coefficient at 40°C to 80°C, α2 is a linear expansion coefficient at 190°C to 230°C, and α3 is a linear expansion coefficient at 250°C to 260°C.

### (3) Ease of dismantlement

Each of the obtained easily dismantlable resin compositions was molded on a nickel plate under conditions of 175°C, 6.9 MPa, and 120 seconds and then subjected to post-curing at 175°C for 4 hours to obtain a test piece.

Further, the test piece was heated to 300°C for 30 minutes and then cooled to room temperature, and the ease of dismantlement was evaluated according to the following standard.

### (Standard)

∘: The cured product of the test piece was peeled off from the nickel plate.
×: The cured product of the test piece was not peeled off from the nickel plate.

**[Table 1]**

| | | | Comparative Example | Example 1 | Example 2 |
|---|---|---|---|---|---|
| Inorganic filler (D) | Inorganic filler 1 | Parts by mass | 50 | | |
| | Inorganic filler 2 | Parts by mass | 15 | 15 | 15 |
| | Inorganic filler 3 | Parts by mass | 15 | 15 | 15 |
| Thermally expansible inorganic material (C) | Thermally expansible inorganic material 1 | Parts by mass | | 50 | |
| Thermosetting resin (A) | Epoxy resin 1 | Parts by mass | 9.0 | 9.0 | 9.0 |
| Curing agent (B) | Curing agent 1 | Parts by mass | 3.0 | 3.0 | 3.0 |
| | Curing agent 2 | Parts by mass | 2.3 | 2.0 | 2.0 |
| Curing accelerator | Curing accelerator 1 | Parts by mass | 0.30 | 0.30 | 0.30 |
| Others | Silane coupling agent | Parts by mass | 0.20 | 0.20 | 0.20 |
| | Coloring agent | Parts by mass | 0.30 | 0.30 | 0.30 |
| | Mold releasing agent | Parts by mass | 0.10 | 0.10 | 0.10 |
| | Ion capturing agent | Parts by mass | 0.15 | 0.15 | 0.15 |
| | Stress-relief agent | Parts by mass | 0.30 | 0.30 | 0.30 |
| | Flame retardant | Parts by mass | 3.0 | 3.0 | 53 |
| TMA | α1 | ppm | 11 | 22 | 19 |
| | α2 | ppm | 45 | 62 | 72 |
| | α3 | ppm | 48 | 300 | 177 |
| | Tg | °C | 120 | 117 | 112 |
| Adhesion strength | S1 (adherend: Cu, without heat treatment) | N/mm² | 15.0 | 15.0 | 20.0 |
| | S2 (adherend: Cu, 300°C, 30 min) | N/mm² | 5.0 | 0.1 | 0.1 |
| | S2/S1 | - | 0.33 | 0.00 | 0.00 |
| Evaluation | Ease of dismantlement | - | × | ○ | ○ |

This application claims priority on the basis of Patent Application No. 2023-040608 filed on March 15, 2023, the entire disclosure of which is incorporated herein by reference.

### REFERENCE SIGNS LIST

1 case
1a cylindrical part
1b side plate part
2 rotor
3 rotating shaft
3a bearing
4 stator
5 permanent magnet
6 yoke part
7 teeth part
8 slot
9 coil
20 liner member
21 semiconductor element
30 substrate
32 die pad
34 outer lead
40 wire
41 stator core
50 resin layer
51 sealing material
65 resin sealing part
71 teeth part tip
72 wall surface
100 rotor
200 power module
101 motor
110 rotor core
112 electromagnetic steel plate
116 groove part
118a end plate
118b end plate
120 magnet
130 fixing member
140 spacing part
150 hole part
160 caulking part
170 rotating shaft

## Claims

1. An easily dismantlable resin composition comprising:
a thermosetting resin,
wherein an adhesion strength ratio (S2/S1) measured according to the following procedure is 0.30 or less,
[procedure]
the easily dismantlable resin composition is molded over a copper substrate under conditions of 175°C, 6.9 MPa, and 120 seconds and then subjected to post-curing at 175°C for 4 hours to obtain a test piece,
an adhesion strength [N/mm²] which is obtained in a case where shearing adhesiveness to the copper substrate is measured at a rate of 300 µm/second at room temperature by using the test piece is denoted as S1 [N/mm²], and
an adhesion strength [N/mm²] which is obtained in a case where the test piece is heated at 300°C for 30 minutes and then shearing adhesiveness to the copper substrate is measured at a rate of 300 µm/second at room temperature is denoted as S2 [N/mm²].

2. The easily dismantlable resin composition according to Claim 1,
wherein the adhesion strength (S2) measured according to the procedure is 3.0 N/mm² or less.

3. The easily dismantlable resin composition according to Claim 1 or 2,
wherein a linear expansion coefficient α2 of a cured product in a temperature range of 190°C to 230°C is 46 ppm/°C or more, where the cured product is obtained by molding the easily dismantlable resin composition under conditions of 175°C, 6.9 MPa, and 120 seconds and then carrying out post-curing at 175°C for 4 hours.

4. The easily dismantlable resin composition according to Claim 1 or 2,
wherein a linear expansion coefficient α3 of a cured product in a temperature range of 250°C to 260°C is 60 ppm/°C or more, where the cured product is obtained by molding the easily dismantlable resin composition under conditions of 175°C, 6.9 MPa, and 120 seconds and then carrying out post-curing at 175°C for 4 hours.

5. The easily dismantlable resin composition according to Claim 1 or 2,
wherein the thermosetting resin includes one or two or more resins selected from an epoxy resin, a phenoxy resin, a polyimide resin, a benzoxazine resin, an unsaturated polyester resin, a phenol resin, a melamine resin, a silicone resin, a cyanate resin, a bismaleimide resin, and an acrylic resin.

6. The easily dismantlable resin composition according to Claim 1 or 2, further comprising:
a curing agent.

7. The easily dismantlable resin composition according to Claim 6,
wherein the curing agent includes a phenol-based curing agent.

8. The easily dismantlable resin composition according to Claim 1 or 2, further comprising:
a thermally expansible inorganic material,
wherein a content of the thermally expansible inorganic material is 5% to 98% by mass with respect to a total amount of the easily dismantlable resin composition.

9. The easily dismantlable resin composition according to Claim 8,
wherein the thermally expansible inorganic material includes one or two or more selected from crystalline silica, crystalline aluminum phosphate, and derivatives thereof.

10. The easily dismantlable resin composition according to Claim 8,
wherein the thermally expansible inorganic material includes one or two or more selected from quartz-type silica, cristobalite-type silica, tridymite-type silica, berlinite-type aluminum phosphate, tridalphite-type aluminum phosphate, crystalphite-type aluminum phosphate, and carnegieite.

11. The easily dismantlable resin composition according to Claim 1 or 2, further comprising:
aluminum hydroxide.

12. The easily dismantlable resin composition according to Claim 11,
wherein a content of the aluminum hydroxide is 1% by mass or more with respect to a total amount of the easily dismantlable resin composition.

13. The easily dismantlable resin composition according to Claim 1 or 2, further comprising:
one or two or more selected from a thermally expansible inorganic material, an inorganic filler, and aluminum hydroxide,
wherein a total content of the thermally expansible inorganic material, the inorganic filler, and the aluminum hydroxide is 60% by mass or more with respect to a total amount of the easily dismantlable resin composition.

14. The easily dismantlable resin composition according to Claim 1 or 2,
wherein the easily dismantlable resin composition has a powder shape, a granule shape, or a tablet shape.

15. A structural body comprising:
a cured product of the easily dismantlable resin composition according to Claim 1 or 2.

16. A dismantling method for a structural body, which is a method of dismantling the structural body according to Claim 15, the dismantling method comprising:
a step of heating the structural body to 200°C or higher to dismantle the cured product of the easily dismantlable resin composition.

17. A recycling method for a material that constitutes the structural body according to Claim 15, the recycling method comprising:
a step of heating the structural body to 200°C or higher to dismantle the cured product of the easily dismantlable resin composition; and
a step of recovering the material from the structural body.

18. The easily dismantlable resin composition according to Claim 1 or 2,
wherein the easily dismantlable resin composition is used for forming a fixing member in a rotor that includes
a rotor core provided to be fixed to a rotating shaft and provided with a plurality of hole parts arranged along a peripheral edge part of the rotating shaft,
a magnet inserted into the hole part, and
the fixing member provided in a spacing part between the hole part and the magnet.

19. A rotor comprising:
a cured product of the easily dismantlable resin composition according to Claim 18, as the fixing member.

20. A dismantling method for a rotor, which is a method of dismantling the rotor according to Claim 19, the dismantling method comprising:
a step of heating the rotor to 200°C or higher to dismantle the cured product of the easily dismantlable resin composition.

21. A recycling method for a material that constitutes the rotor according to Claim 19, the recycling method comprising:
a step of heating the rotor to 200°C or higher to dismantle the cured product of the easily dismantlable resin composition; and
a step of recovering the material from the rotor.

22. The recycling method according to Claim 21,
wherein the material is one or more selected from the magnet inserted into the hole part and an electromagnetic steel plate.

23. The easily dismantlable resin composition according to Claim 1 or 2,
wherein the easily dismantlable resin composition is used for forming a sealing member in a stator that has a stator core having a plurality of teeth parts and a plurality of slots formed in an alternating manner in a circumferential direction, a coil wound around each slot and accommodated in each slot, and having a pair of coil ends respectively protruding toward both sides in an axial direction from the stator core, and the sealing member provided in the slot to cover the coil.

24. A stator comprising:
a cured product of the easily dismantlable resin composition according to Claim 23, as the sealing member.

25. A dismantling method for a stator, which a method of dismantling the stator according to Claim 24, the dismantling method comprising:
a step of heating the stator to 200°C or higher to dismantle the cured product of the easily dismantlable resin composition.

26. A recycling method, which is a recycling method for a material that constitutes the stator according to Claim 24, the recycling method comprising:
a step of heating the stator to 200°C or higher to dismantle the cured product of the easily dismantlable resin composition; and
a step of recovering the material from the stator.

27. The recycling method according to Claim 26,
wherein the material is one or more selected from a coil and an electromagnetic steel plate.

28. The easily dismantlable resin composition according to Claim 1 or 2,
wherein the easily dismantlable resin composition is used for forming a sealing member in a power module that includes a wiring board, a plurality of electronic components mounted over the wiring board, and the sealing member that seals the electronic components.

29. A power module comprising:
a cured product of the easily dismantlable resin composition according to Claim 28, as the sealing member.

30. A dismantling method for a power module, which is a method of dismantling the power module according to Claim 29, the dismantling method comprising:
a step of heating the power module to 200°C or higher to dismantle the cured product of the easily dismantlable resin composition.

31. A recycling method for a material that constitutes the power module according to Claim 29,
the recycling method comprising:
a step of heating the power module to 200°C or higher to dismantle the cured product of the easily dismantlable resin composition; and
a step of recovering the material from the power module.

32. The recycling method according to Claim 31,
wherein the material is a lead frame made of metal.
